# FASCICULE DE BREVET EUROPEEN

(11) **EP 3 169 567 B1**
(45) Date de publication et mention de la délivrance du brevet: **10.10.2018**
(21) Numéro de dépôt: 15730195.3
(22) Date de dépôt: 22.06.2015
(51) Int. Cl.: B60S 1/48, B60S 1/58

(54) **SYSTÈME D'ESSUYAGE POUR VÉHICULE AUTOMOBILE AVEC SYSTÈME DE LAVE-VITRE**
WISCHERANLAGE FÜR EIN KRAFTFAHRZEUG MIT SCHEIBENWISCHANLAGE
WIPER SYSTEM FOR A MOTOR VEHICLE WITH SCREEN WASH SYSTEM

(30) Priorité: 17.07.2014 FR 1456856
(43) Date de publication de la demande: 24.05.2017
(73) Titulaire: Valeo Systèmes d'Essuyage, 78322 Le Mesnil Saint Denis (FR)
(72) Inventeur: BLANCHET, Pierre, F-86140 Clairvaux (FR); GALLAUD, Eric, F-86000 Potiers (FR); JENDRASZCZAK, Jean, F-86100 Châtellerault (FR)
(74) Mandataire: Callu-Danseux, Violaine
(86) Numéro de dépôt international: PCT/EP2015/063991
(87) Numéro de publication internationale: WO 2016/008680

(56) Documents cités:
- DE-A1- 3 743 520
- FR-A1- 2 927 295
- FR-A1- 2 931 118
- FR-A1- 2 994 148
- US-A- 4 275 477

## Description

La présente invention concerne un système d'essuyage d'une surface vitrée de véhicule automobile, telle que le pare-brise et/ou la lunette arrière, présentant un système de lave-vitre.

Dans les systèmes de lave-vitre existant à ce jour, il est connu de prévoir que le liquide de lavage ne soit diffusé que sur une partie seulement de sa course vers le haut ou vers le bas, du balai sur la surface vitrée.

Ainsi, des systèmes de lave-vitre permettant de commander l'aspersion lorsque le ou les bras porte-balai sont dans des zones angulaires prédéfinies ont déjà été développés. Le document US 4,275,477 décrit un premier type de système de lave-vitre apte à coopérer avec le système d'essuyage d'un pare-brise de véhicule. Le système de lave-vitre est structurellement indépendant du système d'essuyage, notamment par le fait que les gicleurs sont fixes par rapport au capot du véhicule. Les deux systèmes coopèrent cependant étroitement du fait qu'une partie du liquide de lavage contenu dans le réservoir de nettoyage est prélevée par une pompe en utilisant des informations et commandes électriques données par une came située sur le moteur d'entraînement du bras porte-balai. Plus précisément, dans ce système, on prévoit qu'il n'y ait aucune aspersion de liquide lorsque le bras arrive à proximité du jet du gicleur.

On connaît du document du document FR2927295 un système d'essuyage d'une surface vitrée de véhicule automobile présentant un système de lave-vitre apte à être utilisé en association avec un réservoir contenant un liquide de lavage.

Ce système d'essuyage comprend un moteur d'entraînement d'un bras porte-balai, et des moyens de génération de signaux de contrôle électriques liés au moteur d'entraînement aptes à générer des signaux (ARRET_FIXE, POMPE) de contrôle électriques variant en fonction de la position angulaire du bras porte-balai sur la surface vitrée.

Le système de lave-vitre comporte une pompe bidirectionnelle destinée à être reliée fluidiquement d'une part audit réservoir, et d'autre part à des gicleurs, disposés sur le bras porte-balai et aptes à délivrer au moins deux jets de liquide de part et d'autre du bras sur le pare-brise.

La pompe bidirectionnelle peut être entraînée dans deux sens opposés de rotation pour alimenter alternativement l'un ou l'autre des gicleurs sous le contrôle desdits moyens de génération de signaux de contrôle électriques de façon à délivrer des jets de liquide en avant du bras par rapport à la direction de balayage.

Cependant pour alimenter une lunette arrière, on doit prévoir une autre pompe avec son propre circuit de commande électrique.

Le document DE 37 43 520 A montre un système d'essuyage d'une surface vitrée comme montré dans le préambule de la première revendication. La présente invention vise à proposer un système d'essuyage simplifié permettant avec une seule pompe de délivrer aussi bien un jet de liquide sur le pare-brise et que sur la lunette arrière tout en permettant une délivrance du jet de liquide sur le pare-brise en fonction de la position angulaire du bras porte-balai sur la surface vitrée.

A cet effet, l'invention a pour objet un système d'essuyage d'une surface vitrée de véhicule automobile présentant un système de lave-vitre apte à être utilisé en association avec un réservoir contenant un liquide de lavage, ledit système d'essuyage comprenant
- un moteur d'entraînement d'au moins un bras porte-balai,
- une pompe destinée à être reliée fluidiquement d'une part audit réservoir, et d'autre part à au moins deux gicleurs dont au moins un est apte à délivrer un jet de liquide au niveau du pare-brise d'un véhicule et dont au moins un autre est apte à délivrer un jet de liquide au niveau de la vitre arrière d'un véhicule, et
- un commutateur présentant au moins une première position pour alimenter ledit au moins un gicleur apte à délivrer un jet de liquide au niveau du pare-brise et une seconde position pour alimenter ledit au moins un gicleur apte à délivrer un jet de liquide au niveau de la vitre arrière,
- la pompe étant une pompe bidirectionnelle apte à être entraînée dans deux sens opposés de rotation pour alimenter l'un ou l'autre des gicleurs sous le contrôle dudit commutateur,
caractérisé en ce que des moyens de génération de signaux de contrôle électriques liés au moteur d'entraînement sont aptes à générer des signaux de contrôle électriques variant en fonction de la position angulaire du bras porte-balai sur la surface vitrée et en ce que ladite pompe bidirectionnelle est alimentée dans la première position du commutateur via les moyens de génération de signaux de contrôle électriques liés au moteur d'entraînement en fonction de la position angulaire du bras porte-balai sur la surface vitrée et en ce que lesdits moyens de génération comportent une surface formant came liée à rotation concentriquement avec un arbre de moteur d'entraînement.

Ainsi, le circuit électrique de commande pour alimenter la pompe bidirectionnelle est simplifiée et le système d'essuyage est moins onéreux.

Le système d'essuyage peut comporter en outre une ou plusieurs des caractéristiques suivantes prises seules ou en combinaison :
Ledit système lave-vitre peut comporter un composant électrique sélectif pour alimenter dans la première position du commutateur la pompe bidirectionnelle via les moyens de génération de signaux de contrôle électriques liés au moteur d'entraînement en fonction de la position angulaire du bras porte-balai sur la surface vitrée et pour shunter lesdits moyens de génération dans la seconde position.

Ledit composant électrique sélectif comprend par exemple une ligne électrique de bipasse disposée en parallèle auxdits moyens de génération et une diode disposée dans la ligne électrique de bipasse.

Selon un aspect, la polarisation de ladite diode est choisie de manière à être à l'état bloquant dans la première position et à l'état passant à la seconde position du commutateur.

Selon un autre aspect, le système comprend une première ligne électrique reliant directement une première sortie du commutateur à ladite pompe bidirectionnelle et une seconde ligne électrique reliant une seconde sortie du commutateur à ladite pompe bidirectionnelle en passant par des entrée / sortie des moyens de génération, la ligne électrique de bipasse étant disposé pour relier directement les entrée / sortie des moyens de génération.

Ledit composant électrique sélectif peut comprendre un relais électrique.

Le système peut comprendre une première ligne électrique reliant directement une première sortie du commutateur à ladite pompe bidirectionnelle et une seconde ligne électrique reliant une seconde sortie du commutateur à ladite pompe bidirectionnelle en passant par des entrée / sortie dudit relais, le relais présentant une entrée de commande relié à une sortie des moyens de génération de sorte à commander le basculement de relais entre une position fermée dans laquelle la pompe bidirectionnelle délivre un jet de liquide et une position ouverte interrompant la délivrance d'un jet de liquide.

Selon un autre aspect, le basculement du relais est commandé par activation d'une bobine actionnant un interrupteur.

Lesdits moyens de génération comportent par exemple une surface formant came liée à rotation concentriquement avec l'arbre du moteur d'entrainement, et des moyens fixes de lecture de la came aptes à coopérer avec ladite came suivant les positions angulaires occupées par ladite came, lesdits moyens de génération étant ainsi aptes à délivrer sur les moyens de lecture deux signaux de contrôle électriques variant chacun en fonction de la position angulaire du bras porte-balai sur la surface vitrée, un premier signal de contrôle électrique utilisé pour définir une fenêtre angulaire lors de laquelle le moteur d'entraînement est en rotation et gérer l'arrêt du moteur dans une position d'arrêt fixe du bras, et un deuxième signal de contrôle électrique permettant de déterminer les périodes dans lesquelles la pompe bidirectionnelle du système de lave-vitre doit être effectivement actionnée.

La surface formant came comporte par exemple des pistes conductrices en arc de cercle, et les moyens de lecture fixes sont constitués par des frotteurs aptes à entrer ou non en contact électrique avec les pistes conductrices suivant les positions angulaires occupées par ladite came.

Le commutateur peut comprendre un interrupteur double.

D'autres avantages et caractéristiques apparaîtront à la lecture de la description de l'invention, ainsi que des dessins annexés sur lesquels :
- la figure 1 est une représentation schématique d'un système d'essuyage selon l'invention selon un premier mode de réalisation avec une première position angulaire d'un moteur d'entraînement d'un bras porte-balai,
- la figure 2 est une représentation schématique du système d'essuyage de la figure 1 avec une seconde position angulaire du moteur d'entraînement du bras porte-balai,
- les figures 3 à 7 sont des représentations schématiques d'un système d'essuyage selon l'invention selon un second mode de réalisation dans divers situations de fonctionnement.

Sur ces figures, les éléments identiques portent les mêmes numéros de référence.

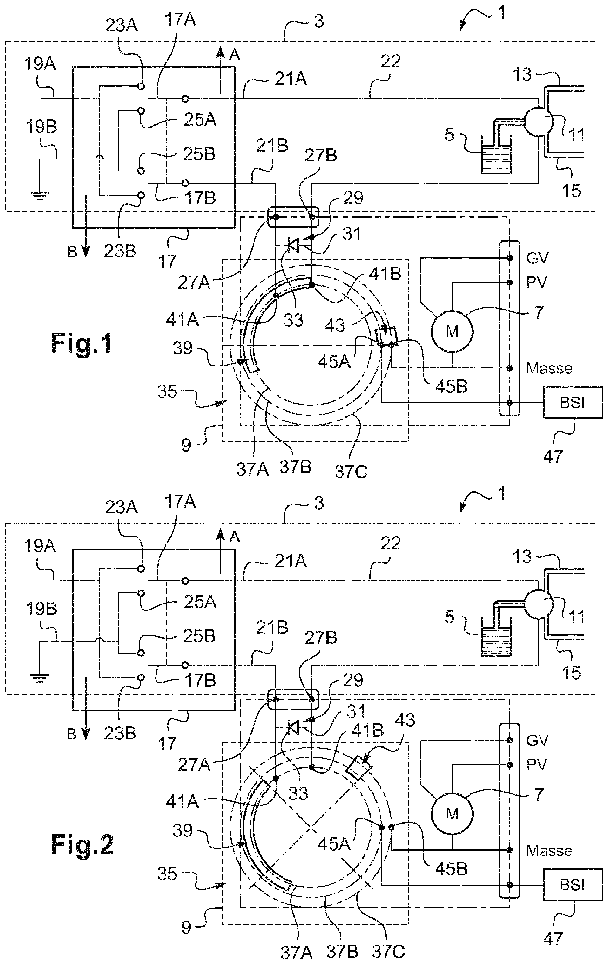

On va maintenant décrire un exemple d'un premier mode de réalisation en référence aux figures 1 et 2 d'un système 1 d'essuyage d'une surface vitrée de véhicule automobile.

Ce système 1 comprend un système de lave-vitre 3 apte à être utilisé en association avec un réservoir 5 contenant un liquide de lavage.

Le système d'essuyage 1 comprend un moteur d'entraînement 7 d'au moins un bras porte-balai (non représenté), en particulier un bras porte-balai situé au niveau du pare-brise.

Le système 1 comprend de plus des moyens 9 de génération de signaux de contrôle électriques liés au moteur d'entraînement 7 aptes à générer des signaux de contrôle électriques variant en fonction de la position angulaire du bras porte-balai sur la surface vitrée, c'est-à-dire le pare-brise dans le cas présent.

Le système de lave-vitre 3 comporte une pompe bidirectionnelle 11 qui est reliée fluidiquement d'une part audit réservoir 5 et d'autre part respectivement via deux conduites de refoulement 13 et 15 à au moins deux gicleurs (non représentés). La conduite de refoulement 13 est reliée à un gicleur apte à délivrer un jet de liquide au niveau du pare-brise d'un véhicule et la conduite de refoulement 15 est reliée à un gicleur apte à délivrer un jet de liquide au niveau de la vitre arrière du véhicule. Le sens de rotation de la pompe bidirectionnelle 11 détermine laquelle des deux conduites de refoulement 13 ou 15 est alimentée donc à quel gicleur, au niveau du pare-brise ou au niveau de la lunette arrière, on délivre un jet de liquide de lavage.

Le système de lave-vitre 3 comporte de plus un commutateur 17, par exemple un interrupteur double formé de deux interrupteurs individuels liés 17A/17B, c'est-à-dire se déplacent simultanément dans un sens.

Le commutateur 17 comporte dans cet exemple de réalisation deux entrées 19A et 19B dont une est branchée à une borne positive et l'autre à la masse et deux sorties 21A et 21B.

La borne positive 19A se scinde en une fourche de contacts extérieurs 23A et 23B et la borne de masse 19B se scinde en une fourche de contacts intérieurs 25 A et 25B.

Les interrupteurs 17A et 17B peuvent prendre trois positions :
- Une position neutre comme montrée sur la figure 1 dans laquelle ils ne sont pas en contact avec les contacts extérieurs 23A, 23B ou intérieurs 25A et 25B. Dans cette position, il n'y a aucun courant d'alimentation de la pompe 11.
- Une position basse ou première position (indiquée par la flèche B) dans laquelle l'interrupteur 17A est en contact avec le contact 25A et l'interrupteur 17B avec le contact 23B. Dans ce cas, la borne d'entrée positive 19A est branchée à la borne de sortie 21B et la borne 21A est branchée à la masse. Cette position sera par exemple définie pour activer la pompe 11 dans un premier sens de rotation permettant de délivrer un jet de liquide sur le pare-brise via la conduite de refoulement 13.
- Une position haute ou seconde position (indiquée par la flèche A) dans laquelle l'interrupteur 17A est en contact avec le contact 23A et l'interrupteur 17B avec le contact 25B. Dans ce cas, la borne d'entrée positive 19A est branchée à la borne de sortie 21A et la borne 21B est branchée à la masse. Cette position sera par exemple définie pour activer la pompe 11 dans un sens inverse de rotation permettant de délivrer un jet de liquide sur la lunette arrière via la conduite de refoulement 15.

La borne 21A est reliée via une première ligne électrique 22 à une borne d'entrée de la pompe bidirectionnelle 11 et la borne 21B à une première borne de connexion 27A. Une seconde borne de connexion 27B est connectée à l'autre borne d'entrée de la pompe bidirectionnelle 11. Les deux bornes de connexion 27A et 27B sont reliées aux moyens 9 de génération de signaux de contrôle électriques.

Le système lave-vitre comporte en outre un composant électrique sélectif 29 pour alimenter dans la première position du commutateur 17 la pompe bidirectionnelle 11 via les moyens 9 de génération de signaux de contrôle électriques liés au moteur d'entraînement 7 en fonction de la position angulaire du bras porte-balai sur la surface vitrée et pour shunter lesdits moyens de génération 9 dans la seconde position.

Dans le présent exemple de réalisation, ledit composant électrique sélectif 29 comprend une ligne électrique de bipasse 31 disposée en parallèle auxdits moyens 9 de génération et une diode 33 disposée dans la ligne électrique de bipasse 31. Plus précisément, la ligne électrique de bipasse 31 est disposée pour relier directement les entrée / sortie, c'est-à-dire les bornes 27A, 27B des moyens de génération 9.

La polarisation de la diode 33 est choisie de manière à être à l'état bloquant dans la première position et à l'état passant à la seconde position du commutateur 17.

Lesdits moyens de génération 9 comportent une surface 35 formant came liée à rotation concentriquement avec l'arbre du moteur d'entrainement 7. Dans le présent cas, cette surface est un disque avec trois pistes concentriques 37 A, B et C.

La première piste 37A, la plus en interne comprend une piste conductrice 39 en arc de cercle.

Un premier et un second contacts frotteurs 41A et 41B reliés respectivement aux bornes 27A et 27B sont disposés à une certaine distance l'un de l'autre sur cette première piste 37A.

Ainsi, lorsque les deux frotteurs 41A et 41B sont simultanément en contact avec la piste conductrice 39, une connexion électrique est établie entre les bornes 27A et 27B.

Un segment conducteur 43 de faible étendue chevauche les pistes 37B et C, les pistes les plus externes.

Un troisième contact frotteur 45A est disposé en face de la piste 37B et relié à un boitier de servitude intelligent (BSI) 47 et un quatrième contact frotteur 45B est disposé en face de la piste 37C et est relié à la masse.

Quand les deux frotteurs 45A et B sont ensemble sur le segment conducteur 43, le boitier BSI 47 est relié à la masse ce qui marque un signal d'arrêt pour le moteur d'entraînement 7.

Le moteur d'entraînement 7 est relié à deux bornes alimentions PV et GV ainsi qu'à la masse.

Le système d'essuyage 1 fonctionne de la manière suivante :
Quand le commutateur 17 est en position neutre, alors que le moteur d'entraînement 7 est alimenté ou pas, la pompe bidirectionnelle 11 n'est pas alimentée et il n'y a pas de jet de liquide de lavage délivré.

Quand le commutateur 17 est dans sa position haute ou seconde position (indiquée par la flèche A), indépendamment de l'alimentation du moteur d'entrainement 7 et de la position de la came 35, le courant électrique passe par la pompe 11 et par le bipasse 31 et la diode 33, de sorte qu'un jet de liquide de lavage délivré sur la lunette arrière par la conduite de refoulement 15. En effet, dans cette position du commutateur 17, la diode 33 est à l'état passant.

A l'inverse, quand le commutateur 17 est dans sa position basse ou première position (indiquée par la flèche B), le courant ne peut plus passer par le bipasse 31 étant donné que la diode 33 est pour cette polarisation à l'état bloquant.

Dans ce cas, la pompe 11 ne peut être alimentée qu'à travers les moyens 9 de génération, plus spécifiquement quand les deux frotteurs 41A et 41B sont simultanément en contact avec la piste conductrice 39 (comme montré sur la figure 1). Dans ce cas, une connexion électrique de polarisation inverse par rapport à la seconde position du commutateur 17 peut alimenter la pompe 11 qui tourne donc dans le sens inverse et alimente via la conduite de refoulement 13 le pare-brise. Dans ce cas, la durée de projection du jet de liquide et l'instant précis de démarrage de la projection dépend de la position angulaire de la came 35 et donc de la position du bras balais sur la vitre.

Comme on peut le voir sur la figure 2, la came 35 est dans une position angulaire différente et les deux frotteurs 41A et 41B ne sont plus en contact avec la piste conductrice 39, mais avec la portion isolante de la première piste 37A. Dans ce cas, la connexion électrique de la pompe 11 est interrompue.

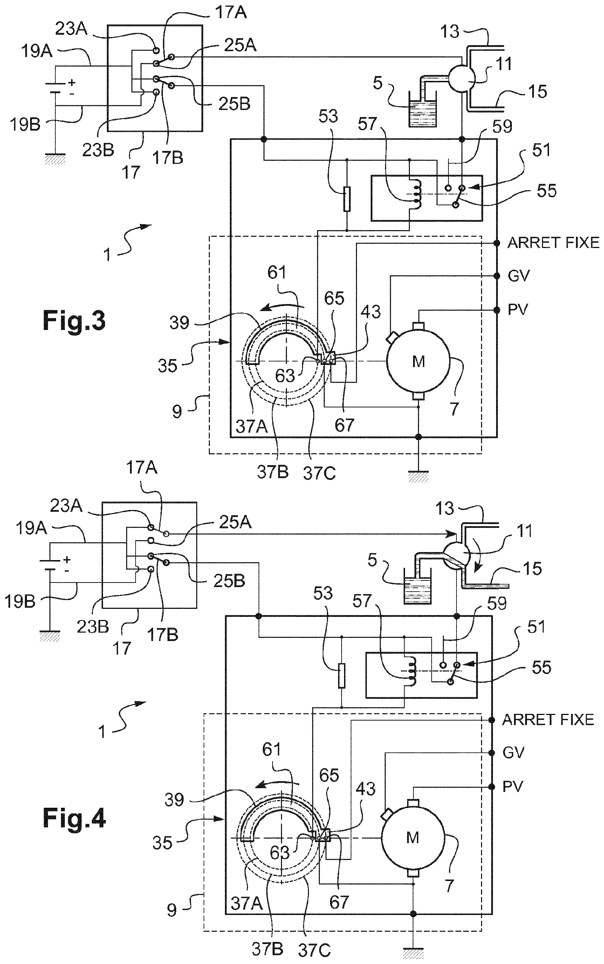

Les figures 3 à 7 montrent un autre mode de réalisation qui diffère de celui des figures 1 et 2 par les points suivants :
Dans la position « neutre » du commutateur 17, les interrupteurs 17A et 17B sont en contact avec les contacts électriques 25A et 25B et donc reliés à la masse. On n'a pas de potentiel flottant comme dans la position neutre du mode de réalisation de la figure 1.

Puis, le composant électrique sélectif 29 comprend un relais électrique 51 qui remplace fonctionnellement la diode 33.

Une résistance 53 est branchée en parallèle au relais 51.

Le relais 51 présente un interrupteur basculant 55 qui par une force élastique, par exemple un ressort, est maintenu dans une position connectant une sortie du relais à la pompe bidirectionnelle 11, sauf si une bobine 57 du relais est parcouru par un courant. Dans ce dernier cas, la force magnétique de la bobine fait basculer l'interrupteur 55 dans une position neutre en connectant ce dernier à une borne 59 à potentiel flottant.

Puis une différence se situe au niveau des moyens 9 de génération. La came 35 possède toujours trois pistes 37A, B et C et une piste conductrice 39 en arc de cercle, par exemple sur 175°.

Cependant, la piste 37B présente maintenant également une piste 61 en arc de cercle parallèle à la piste 39 et un peu plus longue que la piste 39, par exemple sur 180° pour se prolonger dans le segment conducteur 43 de faible étendue (ARRET_POMPE) chevauchant les pistes 37B et C, les pistes les plus externes. Cette piste 61 est connectée électriquement à la piste 39.

Une sortie du relais branchée à la bobine 57 est reliée à un contact frottant 63 situé en vis-à-vis de la piste 37A.

Un contact frottant 65 situé en vis-à-vis de la piste 37B est relié à la masse et un contact frottant 67 situé en vis-à-vis de la piste 37C est relié à une ligne de signal ARRET_FIXE.

Sur la figure 3, le commutateur 17 est dans la position neutre. Dans ce cas, que le moteur d'entraînement 7 soit alimenté ou pas, la pompe bidirectionnelle 11 est branchée à la masse et n'est donc pas alimentée et il n'y a pas de jet de liquide de lavage délivré.

Sur la figure 4, le commutateur 17 est dans sa position haute ou seconde position, le courant électrique passe par la pompe 11 et par le relais 51 indépendamment de l'alimentation du moteur d'entrainement 7 et de la position de la came 35, de sorte qu'un jet de liquide de lavage est délivré sur la lunette arrière par la conduite de refoulement 15. En effet, dans cette position la bobine 57 est toujours reliée à la masse. Le relais ne consomme donc aucun courant et l'interrupteur 55 du relais reste dans sa position dans laquelle il est relié à la pompe 11. Le relais 51 shunte ainsi lesdits moyens de génération 9 dans cette seconde position.

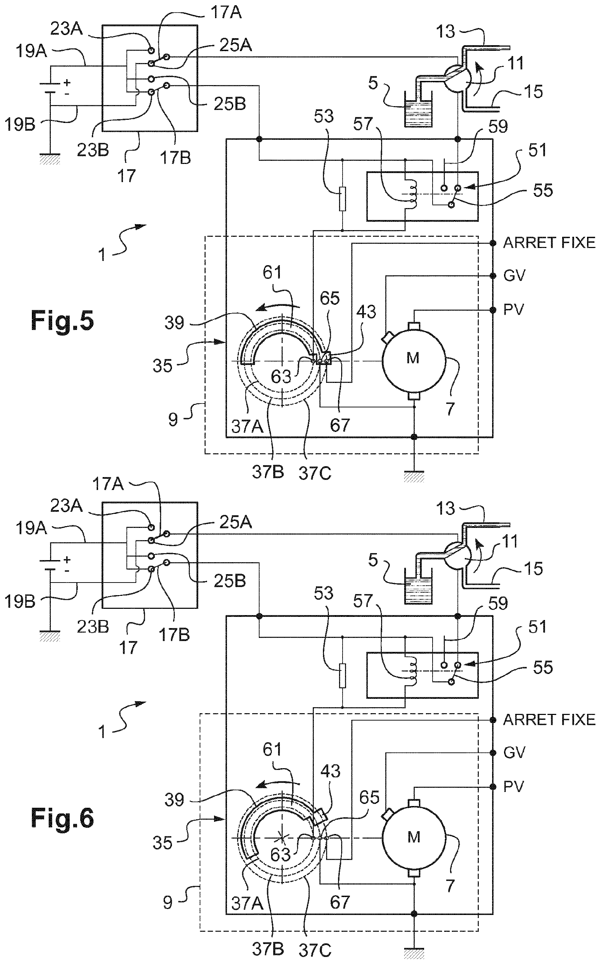

Sur les figures 5 à 7, le commutateur 17 est dans sa position basse ou première position et on a représenté trois positions différentes pour la came 35.

Dans la figure 5, le moteur d'entraînement 7 est dans la position arrêt fixe. Par conséquent, le contact frottant 63 n'est pas en contact électrique avec les pistes conductrices de la came 35 de sorte que la bobine 57 n'est pas alimentée. Dans cette configuration, la pompe 11 est alimentée dans le sens inverse par rapport à la seconde position du commutateur 17 et le(s) gicleur(s) du pare-brise sont alimentés via la conduite de refoulement 13.

Dans la figure 6, le moteur d'entraînement 7 s'est déplacé en tournant à gauche, ce qui correspond à ce que le porte-balais quitte sa position ARRET_FIXE et monte. Etant donné que le contact frotteur 63 est toujours sur la partie non conductrice de la piste 37A, la pompe est alimentée comme cela été expliqué en rapport avec la figure 5.

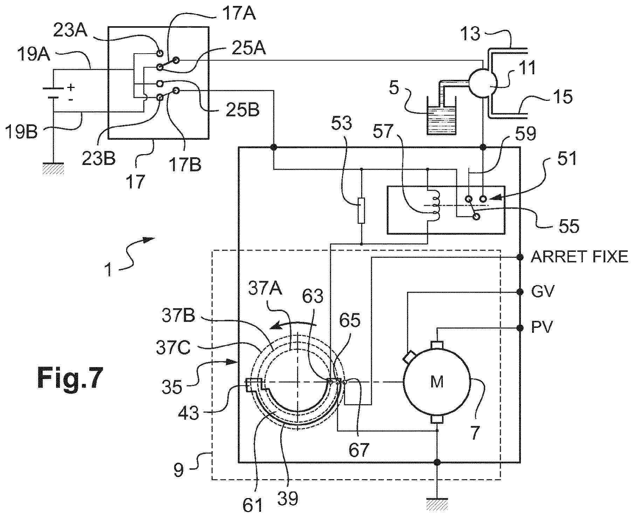

Puis, à la figure 7, le moteur d'entraînement 7 est arrivé à la position d'inversion du mouvement du porte balai. A ce moment, le contact frotteur 63 est sur la piste 39 et le contact frotteur 65 est sur la piste conductrice 61 et donc à la masse.

Ainsi et pendant que les deux contacts frotteurs 63 et 65 sont respectivement sur les pistes conductrices 39 et 61, la bobine 57 est alimentée et bascule donc l'interrupteur 55 du relais 51 de sorte à interrompre l'alimentation de la pompe 11. Cette dernière n'est donc plus alimentée pendant tout le mouvement retour du bras balais vers la position ARRET_FIXE.

On constante que ce circuit est énergétiquement avantageux car la bobine 57 du relais n'est alimentée que pendant le mouvement retour du bras balais.

On comprend donc que la présente invention permet de marier une pompe bidirectionnelle 11 d'un système lave vitre pour une alimentation d'une vitre arrière et du pare-brise avec des moyens de génération 9 de signaux de contrôle électriques liés au moteur d'entraînement 7 aptes à générer des signaux de contrôle électriques variant en fonction de la position angulaire du bras porte-balai sur la surface vitrée.

## Revendications

1. Système d'essuyage (1) d'une surface vitrée de véhicule automobile présentant un système de lave-vitre (3) apte à être utilisé en association avec un réservoir (5) contenant un liquide de lavage, ledit système d'essuyage comprenant :
- un moteur d'entraînement (7) d'au moins un bras porte-balai,
- une pompe (11) destinée à être reliée fluidiquement d'une part audit réservoir (5), et d'autre part à au moins deux gicleurs dont au moins un est apte à délivrer un jet de liquide au niveau du pare-brise d'un véhicule et dont au moins un autre est apte à délivrer un jet de liquide au niveau de la vitre arrière d'un véhicule, et
- un commutateur (17) présentant au moins une première position pour alimenter ledit au moins un gicleur apte à délivrer un jet de liquide au niveau du pare-brise et une seconde position pour alimenter ledit au moins un gicleur apte à délivrer un jet de liquide au niveau de la vitre arrière,
- la pompe (11) étant une pompe bidirectionnelle apte à être entraînée dans deux sens opposés de rotation pour alimenter l'un ou l'autre des gicleurs sous le contrôle dudit commutateur (17),
**caractérisé en ce que** des moyens de génération (9) de signaux de contrôle électriques liés au moteur d'entraînement (7) sont aptes à générer des signaux de contrôle électriques variant en fonction de la position angulaire du bras porte-balai sur la surface vitrée et **en ce que** ladite pompe bidirectionnelle est alimentée dans la première position du commutateur (17) via les moyens de génération (9) de signaux de contrôle électriques liés au moteur d'entraînement (7) en fonction de la position angulaire du bras porte-balai sur la surface vitrée et **en ce que** lesdits moyens de génération (9) comportent une surface formant came liée à rotation concentriquement avec un arbre du moteur d'entraînement (7).

2. Système d'essuyage selon la revendication 1, **caractérisé en ce que** le système lave-vitre (3) comporte un composant électrique sélectif (29) pour alimenter dans la première position du commutateur (17) la pompe bidirectionnelle (11) via les moyens de génération (9) de signaux de contrôle électriques liés au moteur d'entraînement (7) en fonction de la position angulaire du bras porte-balai sur la surface vitrée et pour shunter lesdits moyens de génération (9) dans la seconde position.

3. Système d'essuyage selon la revendication 2, **caractérisé en ce que** ledit composant électrique sélectif (29) comprend une ligne électrique de bipasse (31) disposée en parallèle auxdits moyens de génération et une diode (33) disposée dans la ligne électrique de bipasse (31).

4. Système d'essuyage selon la revendication 3, **caractérisé en ce que** la polarisation de ladite diode (33) est choisie de manière à être à l'état bloquant dans la première position et à l'état passant à la seconde position du commutateur (17).

5. Système d'essuyage selon la revendication 3 ou 4, **caractérisé en ce qu'**il comprend une première ligne électrique (22) reliant directement une première sortie (21A) du commutateur (17) à ladite pompe bidirectionnelle (11) et une seconde ligne électrique reliant une seconde sortie (21B) du commutateur (17) à ladite pompe bidirectionnelle (11) en passant par des entrée / sortie des moyens de génération (9), la ligne électrique de bipasse (31) étant disposée pour relier directement les entrée / sortie des moyens de génération (9).

6. Système d'essuyage selon l'une des revendications précédentes, **caractérisé en ce que** ledit composant électrique sélectif (29) comprend un relais électrique (51).

7. Système d'essuyage selon la revendication 6, **caractérisé en ce qu'**il comprend une première ligne électrique reliant directement une première sortie du commutateur à ladite pompe bidirectionnelle et une seconde ligne électrique reliant une seconde sortie du commutateur à ladite pompe bidirectionnelle en passant par des entrée / sortie dudit relais (51), le relais (51) présentant une entrée de commande relié à une sortie des moyens de génération (9) de sorte à commander le basculement de relais entre une position fermée dans laquelle la pompe bidirectionnelle (11) délivre un jet de liquide et une position ouverte interrompant la délivrance d'un jet de liquide.

8. Système d'essuyage selon la revendication 7, **caractérisé en ce que** le basculement du relais (51) est commandé par activation d'une bobine (57) actionnant un interrupteur (55).

9. Système d'essuyage selon l'une quelconque des revendications précédentes, **caractérisé en ce que** lesdits moyens de génération (9) comportent une surface formant came (35) liée à rotation concentriquement avec l'arbre du moteur d'entrainement (7), et des moyens fixes de lecture de la came (41A, 41B, 45A, 45B, 63, 65, 67) aptes à coopérer avec ladite came (35) suivant les positions angulaires occupées par ladite came, lesdits moyens de génération (9) étant ainsi aptes à délivrer sur les moyens de lecture deux signaux (ARRET_FIXE, POMPE) de contrôle électriques variant chacun en fonction de la position angulaire du bras porte-balai sur la surface vitrée, un premier signal de contrôle électrique (ARRET_FIXE) utilisé pour définir une fenêtre angulaire lors de laquelle le moteur d'entraînement est en rotation et gérer l'arrêt du moteur dans une position d'arrêt fixe du bras, et un deuxième signal de contrôle électrique (POMPE) permettant de déterminer les périodes dans lesquelles la pompe bidirectionnelle (11) du système de lave-vitre doit être effectivement actionnée.

10. Système d'essuyage selon la revendication 9, **caractérisé en ce que** la surface formant came (35) comporte des pistes conductrices (39, 43, 61) en arc de cercle, et **en ce que** les moyens de lecture fixes (41A, 41B, 45A, 45B, 63, 65, 67) sont constitués par des frotteurs aptes à entrer ou non en contact électrique avec les pistes conductrices (39, 43, 61) suivant les positions angulaires occupées par ladite came (35).

11. Système d'essuyage selon l'une quelconque des revendications précédentes, **caractérisé en ce que** le commutateur (17) comprend un interrupteur double (17A, 17B).

## Patentansprüche

1. System zum Wischen (1) einer Glasfläche eines Kraftfahrzeugs, das ein Scheibenwaschsystem (3) aufweist, das in Verbindung mit einem eine Waschflüssigkeit enthaltenden Behälter (5) verwendbar ist, wobei das Wischsystem Folgendes umfasst:
- einen Motor (7) zum Antreiben zumindest eines Wischertragarms,
- eine Pumpe (11) die dazu bestimmt ist, strömungstechnisch einerseits mit dem Behälter (5) und andererseits mit zumindest zwei Düsen, wovon zumindest eine dazu in der Lage ist, einen Flüssigkeitsstrahl im Bereich der Windschutzscheibe eines Fahrzeugs abzugeben, und wovon zumindest eine andere dazu in der Lage ist, einen Flüssigkeitsstrahl im Bereich der Heckscheibe eines Fahrzeugs abzugeben, verbunden zu sein, und
- einen Kommutator (17), der zumindest eine erste Position zum Versorgen der zumindest einen Düse, die dazu in der Lage ist, einen Flüssigkeitsstrahl im Bereich der Windschutzscheibe abzugeben, und eine zweite Position zum Versorgen der zumindest einen Düse, die dazu in der Lage ist, einen Flüssigkeitsstrahl im Bereich der Heckscheibe abzugeben, aufweist,
- wobei die Pumpe (11) eine bidirektionale Pumpe ist, die dazu in der Lage ist, in zwei entgegengesetzte Drehrichtungen angetrieben zu werden, um unter der Steuerung des Kommutators (17) die eine oder die andere der Düsen zu versorgen,
**dadurch gekennzeichnet, dass** mit dem Antriebsmotor (7) verbundene Mittel (9) zur Erzeugung elektrischer Steuersignale dazu in der Lage sind, elektrische Steuersignale zu erzeugen, die entsprechend der Winkelposition des Wischertragarms auf der Glasfläche variieren, und dadurch, dass die bidirektionale Pumpe in der ersten Position des Kommutators (17) über die mit dem Antriebsmotor (7) verbundenen Mittel (9) zur Erzeugung elektrischer Steuersignale entsprechend der Winkelposition des Wischertragarms auf der Glasfläche versorgt wird, und dadurch, dass die Erzeugungsmittel (9) eine Fläche aufweisen, die einen drehbeweglich konzentrisch mit einer Welle des Antriebsmotors (7) verbundenen Nocken ausbildet.

2. Wischsystem nach Anspruch 1, **dadurch gekennzeichnet, dass** das Scheibenwaschsystem (3) ein selektives elektrisches Bauteil (29) aufweist, um in der ersten Position des Kommutators (17) die bidirektionale Pumpe (11) über die mit dem Antriebsmotor (7) verbundenen Mittel (9) zur Erzeugung elektrischer Steuersignale entsprechend der Winkelposition des Wischertragarms auf der Glasfläche zu versorgen und um in der zweiten Position die Erzeugungsmittel (9) zu überbrücken.

3. Wischsystem nach Anspruch 2, **dadurch gekennzeichnet, dass** das selektive elektrische Bauteil (29) eine parallel zu den Erzeugungsmitteln angeordnete elektrische Umgehungsleitung (31) und eine in der elektrischen Umgehungsleitung (31) angeordnete Diode (33) umfasst.

4. Wischsystem nach Anspruch 3, **dadurch gekennzeichnet, dass** die Polung der Diode (33) so gewählt ist, dass sie sich in der ersten Position im Sperrzustand und in der zweiten Position des Kommutators (17) im Durchlasszustand befindet.

5. Wischsystem nach Anspruch 3 oder 4, **dadurch gekennzeichnet, dass** es eine erste elektrische Leitung (22), die einen ersten Ausgang (21A) des Kommutators (17) unmittelbar mit der bidirektionalen Pumpe (11) verbindet, und eine zweite elektrische Leitung, die einen zweiten Ausgang (21B) des Kommutators (17) über Ein-/Ausgänge der Erzeugungsmittel (9) mit der bidirektionalen Pumpe (11) verbindet, umfasst, wobei die elektrische Umgehungsleitung (31) angeordnet ist, um die Ein-/Ausgänge der Erzeugungsmittel (9) unmittelbar zu verbinden.

6. Wischsystem nach einem der vorangehenden Ansprüche, **dadurch gekennzeichnet, dass** das selektive elektrische Bauteil (29) ein elektrisches Relais (51) umfasst.

7. Wischsystem nach Anspruch 6, **dadurch gekennzeichnet, dass** es eine erste elektrische Leitung, die einen ersten Ausgang des Kommutators unmittelbar mit der bidirektionalen Pumpe verbindet, und eine zweite elektrische Leitung, die einen zweiten Ausgang des Kommutators über Ein-/Ausgänge des Relais (51) mit der bidirektionalen Pumpe verbindet, umfasst, wobei das Relais (51) einen Steuereingang aufweist, der so mit einem Ausgang der Erzeugungsmittel (9) verbunden ist, dass er das Umschalten des Relais zwischen einer geschlossenen Position, in der die bidirektionale Pumpe (11) einen Flüssigkeitsstrahl abgibt, und einer offenen Position, welche die Abgabe eines Flüssigkeitsstrahls unterbricht, steuert.

8. Wischsystem nach Anspruch 7, **dadurch gekennzeichnet, dass** das Umschalten des Relais (51) durch Aktivierung einer Spule (57), die einen Schalter (55) betätigt, gesteuert wird.

9. Wischsystem nach einem der vorangehenden Ansprüche, **dadurch gekennzeichnet, dass** die Erzeugungsmittel (9) eine Fläche, die einen drehbeweglich konzentrisch mit der Welle des Antriebsmotors (7) verbundenen Nocken (35) ausbildet, und feststehende Mittel (41A, 41B, 45A, 45B, 63, 65, 67) zum Lesen des Nockens, die dazu in der Lage sind, mit dem Nocken (35) entsprechend den durch den Nocken eingenommenen Winkelpositionen zusammenzuwirken, aufweisen, wobei die Erzeugungsmittel (9) somit dazu in der Lage sind, auf den Lesemitteln zwei elektrische Steuersignale (ARRET_FIXE, POMPE) abzugeben, die jeweils entsprechend der Winkelposition des Wischertragarms auf der Glasfläche variieren, ein erstes elektrisches Steuersignal (ARRET_FIXE), das dazu verwendet wird, ein Winkelfenster zu definieren, bei dem sich der Antriebsmotor in Drehung befindet, und das Stoppen des Motors in einer festen Stoppposition des Arms zu steuern, und ein zweites elektrisches Steuersignal (POMPE), das es erlaubt, Zeiträume zu bestimmen, in denen die bidirektionale Pumpe (11) des Scheibenwaschsystems tatsächlich betätigt werden soll.

10. Wischsystem nach Anspruch 9, **dadurch gekennzeichnet, dass** die Fläche, die den Nocken (35) ausbildet, kreisbogenförmige Leiterbahnen (39, 43, 61) aufweist, und dadurch, dass die feststehenden Lesemittel (41A, 41B, 45A, 45B, 63, 65, 67) aus Wischern ausgebildet sind, die dazu in der Lage sind, entsprechend den durch den Nocken (35) eingenommenen Winkelpositionen mit den Leiterbahnen (39, 43, 61) in elektrischen Kontakt zu treten oder nicht in elektrischen Kontakt zu treten.

11. Wischsystem nach einem der vorangehenden Ansprüche, **dadurch gekennzeichnet, dass** der Kommutator (17) einen Doppelschalter (17A, 17B) umfasst.

## Claims

1. A wiper system (1) for a glazed surface of a motor vehicle including a screen wash system (3) adapted to be used in association with a reservoir (5) containing a washing fluid, said wiper system comprising:
- a motor (7) for driving at least one wiper arm,
- a pump (11) designed to be fluidly connected, on the one hand, to said reservoir (5), and, on the other hand, to at least two nozzles, at least one of which is adapted to deliver a jet of fluid at the windshield of a vehicle and at least another of which is adapted to deliver a jet of fluid at the rear screen of a vehicle, and
- a switch (17) having at least a first position for supplying said at least one nozzle adapted to deliver a jet of fluid at the windshield, and a second position for supplying said at least one nozzle adapted to deliver a jet of fluid at the rear screen,
- the pump (11) being a two-way pump adapted to be driven in two opposite directions of rotation to supply one or other of the nozzles, under the control of said switch (17),
**characterized in that** means (9) for generating electrical control signals linked to the drive motor (7) are adapted to generate electrical control signals which vary according to the angular position of the wiper arm on the glazed surface, and **in that** said two-way pump is powered in the first position of the switch (17) via the electrical control signal generating means (9) connected to the drive motor, according to the angular position of the wiper arm on the glazed surface and **in that** said generating means (9) comprise a surface forming a cam rotationally and concentrically linked to the shaft of the drive motor (7).

2. The wiper system as claimed in claim 1, **characterized in that** the screen wash system (3) further comprises a selective electrical component (29) for powering the two-way pump (11) in the first position of the switch (17), via the electrical control signal generating means (9) connected to the drive motor (7), according to the angular position of the wiper arm on the glazed surface, and for shunting said generating means (9) in the second position.

3. The wiper system as claimed in claim 2, **characterized in that** said selective electrical component (29) comprises an electrical bypass line (31) connected in parallel with said generating means and a diode (33) connected in the electrical bypass line (31) .

4. The wiper system as claimed in claim 3, **characterized in that** the polarization of said diode (33) is selected so as to be in the blocking state in the first position and in the conducting state in the second position of the switch (17).

5. The wiper system as claimed in claim 3 or 4, **characterized in that** it comprises a first electrical line (22) directly connecting a first output (21A) of the switch (17) to said two-way pump (11), and a second electrical line connecting a second output (21B) of the switch (17) to said two-way pump (11), via an input and output of the generating means (9), the electrical bypass line (31) being arranged for the direct connection of the input and output of the generating means (9).

6. The wiper system as claimed in any of the preceding claims, **characterized in that** said selective electrical component (29) comprises an electrical relay (51).

7. The wiper system as claimed in claim 6, **characterized in that** it comprises a first electrical line directly connecting a first output of the switch to said two-way pump, and a second electrical line connecting a second output of the switch to said two-way pump, via an input and output of said relay (51), the relay (51) having a control input connected to an output of the generating means (9) so that the relay can be made to switch between a closed position in which the two-way pump (11) delivers a jet of fluid and an open position which interrupts the delivery of a jet of fluid.

8. The wiper system as claimed in claim 7, **characterized in that** the relay (51) is made to switch by the activation of a coil (57) which actuates a switch (55).

9. The wiper system as claimed in any of the preceding claims, **characterized in that** said generating means (9) comprise a surface forming a cam (35) rotationally and concentrically connected to the shaft of the drive motor (7), and fixed cam follower means (41A, 41B, 45A, 45B, 63, 65, 67) adapted to interact with said cam (35) according to the angular positions occupied by said cam, said generating means (9) being thus adapted to deliver to the follower means two electrical control signals (ARRET_FIXE, POMPE), each varying according to the angular position of the wiper arm on the glazed surface, namely a first electrical control signal (ARRET_FIXE) used to define an angular aperture in which the drive motor is rotating and to cause the motor to stop in a fixed stop position of the arm, and a second electrical control signal (POMPE) for determining the periods in which the two-way pump (11) of the screen wash system is to be actually operated.

10. The wiper system as claimed in claim 9, **characterized in that** the cam-forming surface (35) comprises conductive tracks (39, 43, 61) in the form of an arc, and **in that** the fixed follower means (41A, 41B, 45A, 45B, 63, 65, 67) are sliding contacts which may or may not come into electrical contact with the conductive tracks (39, 43, 61), according to the angular positions occupied by said cam (35).

11. The wiper system as claimed in any of the preceding claims, **characterized in that** the switch (17) comprises a double switch (17A, 17B).
